# EUROPÄISCHE PATENTSCHRIFT

(11) **EP 0 921 150 B1**
(45) Veröffentlichungstag und Bekanntmachung des Hinweises auf die Patenterteilung: **09.04.2003**
(21) Anmeldenummer: 98122928.9
(22) Anmeldetag: 03.12.1998
(51) Int. Cl.: C08K 5/09, C08L 21/00, C08L 9/00, C08L 7/00, B60C 1/00

(54) **Kautschukmischung für Laufstreifen von Fahrzeugreifen**
Rubber composition for vehicle tyre tread
Composition de caoutchouc pour bande de roulement d'un pneumatique pour véhicule

(30) Priorität: 05.12.1997 DE 19754059
(43) Veröffentlichungstag der Anmeldung: 09.06.1999
(73) Patentinhaber: Continental Aktiengesellschaft, 30165 Hannover (DE)
(72) Erfinder: Söhnen, Dietmar, Dr., 31867 Lauenau (DE); Bertrand, Joachim, Dr., 21258 Heidenau (DE)

(56) Entgegenhaltungen:
- EP-A- 0 623 650
- EP-A- 0 677 548
- EP-A- 0 812 879
- FR-A- 2 078 078

## Beschreibung

Die Erfindung betrifft eine schwefelvemetzbare Kautschukmischung für die Herstellung von Laufstreifen für Reifen, insbesondere für solche für Fahrzeuge mit ABS-Bremssystem, die als Kautschukkomponenten Polyisopren, Styren-Butadien-Copolymer gegebenenfalls Polybutadien und als Füllstoffe zumindest Ruß und Kieselsäure sowie weitere übliche Zusatzstoffe enthält.

Da die Fahreigenschaften eines Reifens in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Laufstreifenmischungen hinsichtlich ihrer Polymerkomponenten und ihrer Füllstoffe zu variieren. So ist es bekannt, der Kautschukmischung als Füllstoffe Ruß und/oder Kieselsäure zuzusetzen. Es hat sich insbesondere bei Kieselsäure enthaltenden Kautschukmischungen gezeigt, daß diese dem Reifen einen geringen Rollwiderstand verleihen. Die Verringerung des Rollwiderstandes bewirkt auch einen verminderten Kraftstoffverbrauch. Des weiteren haben die Kieselsäure enthaltenden Laufstreifenmischungen den Vorteil, daß sie dem Reifen bei Fahrzeugen mit einem Antiblockiersystem (ABS) ein besonders gutes Naßrutschverhalten verleihen. Da fast jedes neuere Fahrzeug aus sicherheitstechnischen Gründen ein solches ABS-System aufweist, ist dieser positive Einfluß der Kieselsäure besonders bemerkenswert. Allerdings hat sich herausgestellt, daß das Naßrutschverhalten der Laufflächenmischung des Reifens von der umgebenden Temperatur beeinflußt wird, so daß die Haftung des Reifens auf nasser Straße jahreszeitlich bedingt unterschiedlich ist. Dabei ist die Abhängigkeit des Naßgriffs von der Außentemperatur bei Kieselsäure enthaltenden Laufflächenmischungen im Vergleich zu Ruß enthaltenden Laufflächenmischungen stärker ausgebildet.

In der DE 44 42 692 A1 sind Kautschukmischungen für Reifenlaufstreifen beschrieben, die Polyisopren, Polybutadien und Styren-Butadien-Copolymer und als Füllstoffe Ruß und Kieselsäure sowie weitere übliche Zusatzstoffe enthalten. Die angegebenen Zusammensetzungen zeigen ebenfalls die erwähnte starke Temperaturabhängigkeit des Naßgriffs im Vergleich zu nur Ruß enthaltenden Laufflächenmischungen.

Aus der EP-A-0 623 650 sind ebenfalls Kautschukmischungen für Reifenlaufstreifen bekannt, die cis-1,4-Polyisopren, emulsionspolymerisiertes Styren-Butadien-Copolymer, Kieselsäure und Ruß enthalten.

Die Aufgabe der vorliegenden Anmeldung besteht darin, eine schwefelvernetzbare Kautschukmischung für die Herstellung von Laufstreifen für Reifen, insbesondere für solche für Fahrzeuge mit ABS-Bremssystem, bereitzustellen, bei der die Abhängigkeit des Naßgriffs von der Außentemperatur im Vergleich zu herkömmlichen nur Ruß enthaltenden Mischungen nicht negativ beeinflußt wird.

Gelöst wird diese Aufgabe erfindungsgemäß dadurch, daß die Kautschukmischung bezogen auf 100 Gewichtsteile des gesamten Kautschuks
a) 5 - 50 phr cis 1,4 Polyisopren,
b) 0 - 90 phr lösungspolymerisiertes Styren-Butadien-Copolymer,
c) 0 - 70 phr Polybutadien,
d) emulsionspolymerisiertes Styren-Butadien-Copolymer enthält und zwar maximal 50,
e) als Zusatzstoff 2 bis 10 phr Abietinsäure, Dehydroabietinsäure, Dihydroabietinsäure, Tetrahydroabietinsäure deren Isomere und/oder Mischungen hieraus aufweist und sie weiterhin
f) > 50 phr Kieselsäure enthält und das Verhältnis Kieselsäure zu Ruß größer oder gleich 5 zu 1 ist.

Es war überraschend festzustellen, daß solch eine Kombination für Laufstreifenmischungen eine Möglichkeit offenbart, das bisher noch nicht gelöste Problem der Einflußnahme auf die Temperaturabhängigkeit des Naßrutschverhaltens zu bewältigen.

Das erfindungsgemäß eingesetzte Polyisopren weist einen cis-1,4-Anteil > 90 mol% auf. Solch ein Polyisopren kann durch steriospezifische Polymerisation in Lösung mit Ziegler-Natta-Katalysatoren oder unter Verwendung von fein verteiltem Lithiumalkylen erhalten werden. Vorzugsweise soll für die erfindungsgemäße Kautschukmischung für Laufstreifen Naturkautschuk Verwendung finden. Der cis-1,4 Polyisopren-Anteil im Naturkautschuk beträgt > 99 mol%.
Der Gehalt an cis Polyisopren in der Kautschukmischung beträgt 5 bis 50 phr, vorzugsweise 15 bis 45 phr. Bei Anteilen > 50 phr cis Polyisopren wurden keine weiteren Verbesserungen hinsichtlich einer geringeren Abhängigkeit des Naßgriffs von der Außentemperatur registriert. Außerdem wurden dann die Verhältnisse Naßgriff/Abrieb und Naßgriff/Rollwiderstand negativ beeinflußt.

Für die erfindungsgemäße Kautschukmischung soll Polybutadien verwendet werden, der auf herkömmliche Art und Weise hergestellt werden kann. So können sowohl cis- als auch vinyl-Polybutadien verwendet werden. Der Gehalt an Polybutadien in der Kautschukmischung beträgt 0 bis 70 phr, vorzugsweise 10 bis 30 phr. Bei höheren Anteilen (> 70 phr) Polybutadien treten verarbeitungstechnische Probleme bei der Herstellung der Kautschukmischung auf.

Das in der erfindungsgemäßen Kautschukmischung zum Einsatz kommende in Lösung polymerisierte Styren-Butadien-Copolymerisat (S-SBR) kann unter Verwendung von z. B. Lithiumalkylen hergestellt werden. Der Styrenanteil dieser Polymere beträgt ca. 15 bis 35 Gew%. Prinzipiell können alle im Handel erhältlichen S-SBR-Typen eingesetzt werden. Der Anteil an S-SBR in der Kautschukmischung beträgt 0 bis 90 phr, vorzugsweise 20 bis 50 phr.

Das durch Emulsionspolymerisation hergestellte Copolymer aus Styren und Butadien (E-SBR) weist einen gebundenen Styrenanteil von ca. 15 bis 50 Gew.% auf. Auch hierfür können aus dem Stand der Technik übliche Typen verwendet werden. Es wurde festgestellt, daß die Zusammensetzung des E-Styren-Butadien Copolymers (z. B. Styrengehalt) keinen Einfluß auf die Abhängigkeit des Naßrutschverhaltens bei verschiedenen Außentemperaturen zeigt, abgesehen von den bekannten Glasübergangspunkt abhängigen Einfriereffekten bei Kautschuken. Die Verwendung dieses Kautschuks hat einen positiven Einfluß auf die Strukturfestigkeit der Laufstreifenmischung im vulkanisierten Zustand. Besonders vorteilhaft wirkt sich aus, wenn in der Kautschukmischung 5 bis 35 phr E-SBR enthalten sind. Ab E-SBR Anteile > 25 phr wird in die erfindungsgemäße Kautschukmischung als Zusatzstoff 2 bis 10 phr Abietinsäure, Dehydroabietinsäure, Dihydroabietinsäure, Tetrahydroabietinsäure deren Isomere und/oder Mischungen hieraus eingemischt. Es hat sich nämlich herausgestellt, daß bei einem E-SBR-Gehalt > 25 phr ohne die Zugabe von 2 bis 10 phr, vorzugsweise 3 bis 7 phr, Abietinsäure, Dehydroabietinsäure, Dihydroabietinsäure, Tetrahydroabietinsäure deren Isomere und/oder Mischungen hieraus die Temperaturabhängigkeit des Naßrutschverhaltenes des Reifens wie bei herkömmlichen Laufstreifenmischungen erhalten blieb. Es ist aber auch möglich, bei Gehalten < 25 phr E-SBR diese Substanzen bereits einzumischen.

Die in der erfindungsgemäßen Kautschukmischung zur Anwendung kommende Kieselsäure ist aus dem Stand der Technik bekannt. So sollen Kieselsäure mit einer BET-Oberfläche von 145 - 270 m²/g (ASTM D 5604) und einer CTAB-Zahl von 120 - 285 m²/g (ASTM D 3765) Verwendung finden. Als Kieselsäure kann somit z. B. VN3 (Handelsname) der Firma Degussa zum Einsatz kommen. Der Anteil der Kieselsäure in der Kautschukmischung beträgt > 50 phr. Die obere Grenze des Kieselsäuregehaltes kann z. B. bei 130 phr liegen, jedoch können auch noch größere Konzentrationen eingesetzt werden. Zur Anbindung der Kieselsäure an das Polymersystem werden Aktivierungsmittel, z. B. Silane wie Bis-3-(triethoxysilylpropyl)tetrasulfid (TESPT) bzw. das entsprechende Disulfid verwendet.

Als weiterer Füllstoff wird in der erfindungsgemäßen Kautschukmischung Ruß verwendet. So enthält die Kautschukmischung eine Mindestrußmenge von vorzugsweise 5 bis 15 phr. Die Ruße sollen folgende Charakteristika aufweisen: DBP-Zahl (ASTM D 2414) 90 bis 200 cm³ /100 g und CTAB-Zahl (ASTM D 3765) von 80 bis 170 m²/g.

Das Verhältnis von den Füllstoffen Kieselsäure zu Ruß beträgt für die erfindungsgemäße Kautschukmischung ≥ 5 zu 1, vorteilhafterweise ≥ 8 zu 1.

Des weiteren soll die erfindungsgemäße Kautschukmischung übliche Zusatzstoffe wie Alterungsschutzmittel, Verarbeitungshilfsmittel und Weichmacher anteilig auch z. B. kälteflexible Weichmacher (z. B. Rapsöl) enthalten. Dieser spezielle Weichmacher bringt weitere Vorteile bezüglich der Verarbeitung. Zur Vulkanisation wird Schwefel bzw. Schwefelspender verwendet und außerdem sollen vulkanisationsbeeinflussende Stoffe wie Beschleuniger (z. B. CBS, DPG) oder Aktivatoren eingesetzt werden. Bei Verwendung von Abietinsäure, Dehydroabietinsäure, Dihydroabietinsäure, Tetrahydroabietinsäure deren Isomere und/oder Mischungen hieraus sei auch auf Vulkanisationssysteme, wie in der deutschen Patentanmeldung 196 23 346.1 beschrieben, verwiesen.

Besonders bevorzugt ist, wenn die Kautschukmischung 20 bis 40 phr Naturkautschuk, 5 bis 25 phr Polybutadien, 40 bis 60 phr lösungspolymerisiertes Styren-Butadien-Copolymer, maximal 35 phr emulsionspolymerisiertes Styren-Butadien-Copolymer, 3 bis 10 phr Ruß, 75 bis 95 phr Kieselsäure, 3 bis 7 phr Abietinsäure, Dehydroabietinsäure, Dihydroabietinsäure, Tetrahydroabietinsäure deren Isomere und/oder Mischungen hieraus sowie weitere übliche Zusatzstoffe enthält. Solch eine Kautschukmischung zeigt eine geringe Temperaturabhängigkeit des Naßrutschverhalten und es wird zusätzlich eine Anhebung der konträren Reifeneigenschaften Naßgriff und Rollwiderstand auf höherem Niveau festgestellt.

Die Herstellung der erfindungsgemäßen Kautschukmischung erfolgt auf herkömmliche Art und Weise in einer oder mehreren Mischstufen. Anschließend wird diese weiterverarbeitet z. B. durch einen Extrusionsvorgang und in die entsprechende Form gebracht. Dieser Laufstreifenmischungsrohling wird bei der Herstellung des Reifenrohlings wie bekannt aufgelegt. Nach der Vulkanisation des Reifens weist dieser eine geringere Abhängigkeit des Naßgriffs von der Außentemperatur bei ABS-gebremsten Fahrzeugen im Vergleich zu nur Ruß enthaltenden Laufstreifenmischungen und zu Kieselsäure enthaltenden Mischungen des Standes der Technik auf. Dabei ist es unerheblich, ob der gesamte Laufstreifen aus einer einzigen Mischung hergestellt worden ist oder einen z. B. Cap- und Base-Aufbau aufweist, denn wichtig ist, daß zumindest die mit der Fahrbahn in Berührung kommende Fläche aus der erfindungsgemäßen Kautschukmischung hergestellt worden ist.

Anhand der folgende Tabelle 1 soll ein Ausführungsbeispiel näher erläutert werden:

**Tabelle 1**

| | ***Standard- mischungen [phr]*** | | | ***Mischungen [phr]*** | | | |
|---|---|---|---|---|---|---|---|
| **Bestandteile** | **1** | **2** | **3** | **1** | **2** | **3** | **4** |
| Naturkautschuk | -- | -- | 30 | 30 | 30 | 30 | 30 |
| Polybutadien (BR) | -- | 45 | 15 | 15 | 15 | 15 | 15 |
| S-SBR VSL 5025* | -- | 55 | 20 | 50 | 20 | 50 | 50 |
| E-SBR (23,5 % Styren) | 100 | -- | -- | -- | -- | -- | -- |
| E-SBR (40,0 % Styren) | -- | -- | 35 | 5 | 35 | 5 | 5 |
| Kieselsäure VN3** | -- | 80 | 85 | 85 | 85 | 85 | 85 |
| Ruß N 339 | 80 | 10 | 5 | 5 | 5 | 5 | 5 |
| Silan (TESPT) | -- | 12,5 | 13 | 13 | 13 | 13 | 13 |
| Abietinsäure | -- | -- | -- | -- | 5 | 5 | -- |
| Rapsöl | -- | -- | -- | -- | -- | -- | 5 |
| aromatisches Öl (Gesamtmenge) | 34 | 35 | 41 | 41 | 38 | 38 | 36 |
| ZnO | 2 | 2 | 2 | 2 | 2 | 2 | 2 |
| Stearinsäure | 1 | 1 | 1 | 1 | 1 | 1 | 1 |
| Alterungsschutzmittel | 4 | 4 | 4 | 4 | 4 | 4 | 4 |
| Verarbeitungshilfsmittel | -- | 4 | 4 | 4 | 4 | 4 | 4 |
| Schwefel | 1,9 | 1,6 | 1,6 | 1,6 | 1,6 | 1,6 | 1,6 |
| Beschleuniger | 1,8 | 3,6 | 3,6 | 3,6 | 3,5 | 3,5 | 3,6 |

| **Eigenschaften** | | | | | | | |
|---|---|---|---|---|---|---|---|
| Naßrutschverhalten bei ABS-Bremsen (Werte > 100 sind Verbesserungen) bei folgenden Temperaturen: | | | | | | | |
| 5 °C | 100 | 106 | 118 | 121 | 121 | 120 | 124 |
| 15 °C | 100 | 103 | 117 | 126 | 120 | 129 | 127 |
| 30 °C | 100 | 98 | 115 | 127 | 122 | 130 | 127 |
| **Differenz (30-5) °C** | **0** | **-8** | **-3** | **+6** | **+1** | **+10** | **+3** |
| Rollwiderstand | 100 | 116 | 103 | 107 | 101 | 104 | 109 |

| | | | | | | | |
|---|---|---|---|---|---|---|---|
| * Fa. Bayer AG | | | | | | | |
| ** Fa. Degussa AG | | | | | | | |

Die Reifenergebnisse der Standardmischung 1 (nur Ruß enthaltende Laufflächenmischung) wurden dem Wert 100 zugeordnet, so daß Werte > 100 eine Verbesserung in der entsprechenden Eigenschaft darstellen. Um die Eigenschaften von Kieselsäure gefüllten Mischungen auszunutzen, wie den geringeren Rollwiderstand (Standardmischung 2) wird zwar die Haftung auf naßer Straße bei geringeren Außentemperaturen angehoben, jedoch ist ein Abfall bei höheren Temperaturen zu verzeichnen. Bei den erfindungsgemäßen Mischungen 2 und 3 kann nun über den gesamten Temperaturbereich von 5 bis 30 °C die Abhängigkeit des Naßrutschverhaltens von der Temperatur im Vergleich zu herkömmlichen Ruß enthaltenden Mischungen und zu Kieselsäure enthaltende Mischungen des Standes der Technik verbessert werden (Werte (30-5 °C)). Gleichzeitig konnte das Niveau der konträren Reifeneigenschaften Naßgriff und Rollwiderstand generell angehoben werden. Der Vergleich der erfindungsgemäßen Mischungen 2 und 3 mit der Standardmischung 3 zeigt, daß bei einem E-SBR - Gehalt von > 25 phr oder auch weniger sich die Zugabe von Abietinsäure positiv auf die Temperaturabhängigkeit des Naßrutschverhaltens auswirkt. Auch hat die Zugabe von Rapsöl (Mischung 4) einen positiven Einfluß auf das Naßrutschverhalten bei geringeren Temperaturen (Vergleich zu Mischung 1). Erfindungsgemäß können nun Fahrzeugreifen, insbesondere Fahrzeugluftreifen, mit Kieselsäure-Laufflächenmischungstechnologie bereitgestellt werden, bei denen der Naßgriff in Abhängigkeit von der Außentemperatur im Vergleich zu Reifen mit Rußmischungen konstant bleibt oder verbessert wird und gleichzeitig das Niveau der konträren Eigenschaften Naßgriff und Rollwiderstand angehoben werden kann. Damit wird es möglich, über eine großen Zeitraum des Jahres das Fahrzeug, das ein ABS-Bremssystem aufweist, mit Reifen auszustatten die in der Lage sind zu einer höheren Sicherheit auf den Straßen beizutragen.

## Patentansprüche

1. Schwefelvernetzbare Kautschukmischung für die Herstellung von Laufstreifen für Reifen, insbesondere für solche für Fahrzeuge mit ABS-Bremssystem, die als Kautschukkomponenten Polyisopren, Styren-Butadien-Copolymer und gegebenenfalls Polybutadien und als Füllstoffe zumindest Ruß und Kieselsäure sowie weitere übliche Zusatzstoffe enthält,
wobei die Kautschukmischung bezogen auf 100 Gewichtsteile der gesamten Kautschukkomponenten
a) 5 - 50 phr cis 1,4 Polyisopren,
b) 0 - 90 phr lösungspolymerisiertes Styren-Butadien-Copolymer,
c) 0 - 70 phr Polybutadien und
d) emulsionspolymerisiertes Styren-Butadien-Copolymer enthält und zwar maximal 50 phr,
e) als Zusatzstoff 2 bis 10 phr Abietinsäure, Dehydroabietinsäure, Dihydroabietinsäure, Tetrahydroabietinsäure deren Isomere und/oder Mischungen hieraus aufweist und sie weiterhin
f) > 50 phr Kieselsäure enthält und das Verhältnis Kieselsäure zu Ruß größer oder gleich 5 zu 1 ist.

2. Kautschukmischung nach Anspruch 1, **dadurch gekennzeichnet, daß** das Verhältnis Kieselsäure zu Ruß größer 8 zu 1 ist.

3. Kautschukmischung nach zumindest einem der vorhergehenden Ansprüche, **dadurch gekennzeichnet, daß** das cis 1,4 Polyisopren Naturkautschuk ist.

4. Kautschukmischung nach zumindest einem der vorhergehenden Ansprüche, **dadurch gekennzeichnet, daß** die Kautschukmischung 3 bis 7 phr Abietinsäure, Dehydroabietinsäure, Dihydroabietinsäure, Tetrahydroabietinsäure deren Isomere und/oder Mischungen hieraus enthält.

5. Kautschukmischung nach zumindest einem der vorhergehenden Ansprüche, **dadurch gekennzeichnet, daß** die Kautschukmischung 20 bis 40 phr Naturkautschuk, 5 bis 25 phr Polybutadien, 40 bis 60 phr lösungspolymerisiertes Styren-Butadien-Copolymer, maximal 35 phr emulsionspolymerisiertes Styren-Butadien-Copolymer, 3 bis 10 phr Ruß, 75 bis 95 phr Kieselsäure, 3 bis 7 phr Abietinsäure, Dehydroabietinsäure, Dihydroabietinsäure, Tetrahydroabietinsäure deren Isomere und/oder Mischungen hieraus sowie weitere übliche Zusatzstoffe enthält.

6. Kautschukmischung nach zumindest einem der vorhergehenden Ansprüche, **dadurch gekennzeichnet, daß** die Kautschukmischung als Zusatzstoff Rapsöl enthält.

7. Fahrzeugluftreifen, **dadurch gekennzeichnet, daß** er einen Reifenlaufstreifen aufweist, der aus der Kautschukmischung nach zumindest einem der vorhergehenden Ansprüche hergestellt ist.

## Claims

1. Sulphur-cross-linkable rubber mixture for the production of tread strips for tyres, more especially for the tread strips for vehicles having an ABS braking system, which rubber mixture contains, as the rubber components, polyisoprene, styrene-butadiene copolymer and possibly polybutadiene and, as the fillers, at least carbon black and silica as well as additional conventional additives, wherein the rubber mixture contains, relative to 100 parts by weight of the total rubber component,
a) 5 - 50 phr cis 1,4 polyisoprene,
b) 0 - 90 phr solution-polymerised styrene-butadiene copolymer,
c) 0 - 70 phr polybutadiene, and
d) emulsion-polymerised styrene-butadiene copolymer, that is to say a maximum of 50 phr;
e) it includes, as the additive, 2 to 10 phr abietic acid, dehydroabietic acid, dihydroabietic acid, tetrahydroabietic acid, the isomers thereof and/or mixtures formed therefrom; and it also contains
f) > 50 phr silica, and the ratio of silica to carbon black is greater than, or is equal to, 5 to 1.

2. Rubber mixture according to claim 1, **characterised in that** the ratio of silica to carbon black is greater than 8 to 1.

3. Rubber mixture according to at least one of the preceding claims, **characterised in that** the cis 1,4 polyisoprene is natural rubber.

4. Rubber mixture according to at least one of the preceding claims, **characterised in that** the rubber mixture contains 3 to 7 phr abietic acid, dehydroabietic acid, dihydroabietic acid, tetrahydroabietic acid, the isomers thereof and/or mixtures formed therefrom.

5. Rubber mixture according to at least one of the preceding claims, **characterised in that** the rubber mixture contains 20 to 40 phr natural rubber, 5 to 25 phr polybutadiene, 40 to 60 phr solution-polymerised styrene-butadiene copolymer, a maximum of 35 phr emulsion-polymerised styrene-butadiene copolymer, 3 to 10 phr carbon black, 75 to 95 phr silica, 3 to 7 phr abietic acid, dehydroabietic acid, dihydroabietic acid, tetrahydroabietic acid, the isomers thereof and/or mixtures formed therefrom, as well as additional conventional additives.

6. Rubber mixture according to at least one of the preceding claims, **characterised in that** the rubber mixture contains rapeseed oil as the additive.

7. Pneumatic vehicle tyre, **characterised in that** it includes a tyre tread strip which is produced from the rubber mixture according to at least one of the preceding claims.

## Revendications

1. Mélange de caoutchouc réticulable avec du soufre pour la fabrication de bandes de roulement pour des pneumatiques, en particulier pour des pneumatiques tels que ceux utilisés pour des véhicules équipés du système de freinage ABS, lequel mélange de caoutchouc contient, comme composants du caoutchouc, du polyisoprène, un copolymère de styrène et de butadiène et, le cas échéant, du polybutadiène et, comme charges, au moins du noir de carbone et de l'acide silique ainsi que d'autres additifs courants,
où le mélange de caoutchouc, par rapport à 100 parties en poids de la totalité des composants de caoutchouc, contient :
a) entre 5 phr et 50 phr de cis-1,4-polyisoprène,
b) entre 0 phr et 90 phr d'un copolymère de styrène et de butadiène polymérisé en solution
c) entre 0 phr et 70 phr de polybutadiène, et
d) au maximum 50 phr d'un copolymère de styrène et de butadiène polymérisé en émulsion,
e) comme additif, entre 2 phr et 10 phr d'acide abiétique, d'acide déshydroabiétique, d'acide dihydroabiétique, d'acide tétrahydroabiétique, des isomères et/ou des mélanges de ces acides, le mélange de caoutchouc contenant en outre
f) > 50 phr d'acide silique, le rapport acide silique sur noir de carbone étant supérieur ou égal à 5 sur 1.

2. Mélange de caoutchouc selon la revendication 1, **caractérisé en ce que** le rapport acide silique sur noir de carbone est supérieur à 8 sur 1.

3. Mélange de caoutchouc selon au moins l'une quelconque des revendications précédentes, **caractérisé en ce que** le cis-1,4-polyisoprène est du caoutchouc naturel.

4. Mélange de caoutchouc selon au moins l'une quelconque des revendications précédentes, **caractérisé en ce que** le mélange de caoutchouc contient entre 3 phr et 7 phr d'acide abiétique, d'acide déshydroabiétique, d'acide dihydroabiétique, d'acide tétrahydroabiétique, des isomères et/ou des mélanges de ces acides.

5. Mélange de caoutchouc selon au moins l'une quelconque des revendications précédentes, **caractérisé en ce que** le mélange de caoutchouc contient entre 20 phr et 40 phr de caoutchouc naturel, de 5 phr à 25 phr de polybutadiène, de 40 phr à 60 phr d'un copolymère de styrène et de butadiène polymérisé en solution, au maximum 35 phr d'un copolymère de styrène et de butadiène polymérisé en émulsion, de 3 phr à 10 phr de noir de carbone, de 75 phr à 95 phr d'acide silique, de 3 phr à 7 phr d'acide abiétique, d'acide déshydroabiétique, d'acide dihydroabiétique, d'acide tétrahydroabiétique, des isomères et/ou des mélanges de ces acides, ainsi que d'autres additifs courants.

6. Mélange de caoutchouc selon au moins l'une quelconque des revendications précédentes, **caractérisé en ce que** le mélange de caoutchouc contient de l'huile de colza utilisée comme additif.

7. Pneumatique de véhicule, **caractérisé en ce qu'**il comprend une bande de roulement qui est fabriquée à partir du mélange de caoutchouc selon au moins l'une quelconque des revendications précédentes.
